# EUROPÄISCHE PATENTSCHRIFT

(11) **EP 2 734 742 B1**
(45) Veröffentlichungstag und Bekanntmachung des Hinweises auf die Patenterteilung: **17.08.2016**
(21) Anmeldenummer: 12734942.1
(22) Anmeldetag: 11.07.2012
(51) Int. Cl.: F16B 39/284, F16B 39/32

(54) **VORRICHTUNG ZUR LAGESICHERUNG EINER EINHEIT**
DEVICE FOR LOCKING A UNIT
DISPOSITIF DE VERROUILLAGE D'UNE UNITÉ

(30) Priorität: 20.07.2011 DE 102011051961
(43) Veröffentlichungstag der Anmeldung: 28.05.2014
(73) Patentinhaber: Robert Bosch Automotive Steering GmbH, 73527 Schwäbisch Gmünd (DE)
(72) Erfinder: SCHMID, Jochen, 73553 Alfdorf-Rienharz (DE); Kaißer, Richard, 73116 Wäschenbeuren (DE); BIEBER, Jürgen, 73655 Plüderhausen (DE); SCHÄNZEL, Rainer, 73457 Essingen (DE)
(86) Internationale Anmeldenummer: PCT/EP2012/063571
(87) Internationale Veröffentlichungsnummer: WO 2013/010873

(56) Entgegenhaltungen:
- EP-A1- 1 914 430
- WO-A1-00/73672
- WO-A1-2009/001421
- DE-A1- 3 935 753

## Beschreibung

Die Erfindung betrifft eine Vorrichtung zur Lagesicherung einer Einheit in einem Gehäuse, insbesondere eines Ritzels in einem Lenkgetriebe eines Kraftfahrzeuges.

Bekannte Lagesicherungen erfolgen über Schraubenverbindungen, z. B. Stahlschrauben, mit metrischem Gewinde. Die Schraubensicherung wird dabei kraftschlüssig über ein Anziehdrehmoment, über eine Verstemmung oder über eine Klebeverbindung erreicht. Eine Fixierung z. B. eines Lagers erfolgt bei bekannten Sicherungen z. B. mit Hilfe einer Zink-Druckguss-Stellschraube, die nach einem definierten Anzugsmoment mit Hilfe eines Verstemmprozesses in ihrer Lage fixiert wird.

In den DE 39 35 753 A1, EP 1 914 430 A1 und WO 2009/001 421 A1 sind Lagesicherungen beschrieben, bei denen jeweils ein Sicherungselement in eine Bohrung eingreift, wobei an dem Sicherungselement zumindest ein radial nach außen vorgespanntes Rastorgan vorgesehen ist, das sich zum Zwecke einer Verdrehsicherung an einer Gehäusewand der Bohrung (2) abstützt.

Ein Problem dabei liegt jedoch in der Verwendung von Werkstoffen mit unterschiedlichen Wärmeausdehnungskoeffizienten, wodurch sich die Sicherungswirkung über die Lebensdauer verringert, beziehungsweise sogar ein Spiel entstehen kann. Das Setzverhalten des Werkstoffes der Stellschraube gegenüber dem Gehäusewerkstoff beeinflusst eine Sicherung bzw. Fixierung ebenfalls negativ. Nachteilig ist auch, dass die Stellschraube über einen gesonderten Arbeitsgang in dem Gehäuse in ihrer Lage fixiert werden muss. Dadurch dass die Vorspannung der Stellschraube über die Laufzeit unter Umständen bis auf Null absinkt, kann es zu einem Spiel zwischen der zu sichernden Einheit, z. B. einem Festlager, und der Stellschraube bzw. dem Gehäuse kommen. Daraus resultiert ein Reibverschleiß und es können Akustikprobleme auftreten.

Zur Abdichtung gegenüber äußeren Medien wird häufig ein Gewindedichtmittel verwendet, wodurch der Herstell- und/oder Montageprozess ebenfalls aufwendiger wird.

Der vorliegenden Erfindung liegt daher die Aufgabe zugrunde, eine kostengünstige und montagefreundliche Vorrichtung zur Sicherung einer Einheit zu schaffen, wobei eine spielfreie Fixierung über die Lebensdauer gegeben sein soll.

Erfindungsgemäß wird diese Aufgabe durch die in Anspruch 1 genannten Merkmale gelöst.

Durch die erfindungsgemäße Ausbildung der Sicherungsvorrichtung mit einem Sicherungselement, das mit wenigstens einem Rasthebel und einer Rastnase versehen ist, wobei das Sicherungselement mit einer Verzahnungsgeometrie in einer Bohrung im Gehäuse zusammen arbeitet, wird sichergestellt, dass auch bei unterschiedlichen Wärmeausdehnungskoeffizienten eine Spielfreiheit und damit eine sichere Fixierung der Einheit, z. B. einem Festlager, erreicht wird.

Alternativ zu dieser Lösung kann in kinematischer Umkehrung auch der wenigstens eine Rasthebel mit der Rastnase in der Bohrung im Gehäuse, z. B. an einem in die Bohrung eingesetzten Einsatzring, angeordnet sein, wobei in diesem Falle das Sicherungselement mit einer Verzahnungsgeometrie versehen ist, in deren Lücken die Rastnase einrasten kann.

In einer sehr vorteilhaften Ausgestaltung der Erfindung ist vorgesehen, dass das Sicherungselement als Sicherungsschraube ausgebildet ist, die über ein Außengewinde mit einem Innengewinde der Bohrung des Gehäuses verbunden ist, wobei die Sicherungsschraube mit an ihrem Umfang verteilt angeordneten Rasthebel versehen ist, und wobei die Rasthebel jeweils mit an den freien Enden der Rasthebel angeordnete Rastnasen in Verzahnungslücken der Verzahnungsgeometrie des Gehäuses einrasten.

Weitere vorteilhafte Ausgestaltungen und Weiterbildungen ergeben sich aus den Unteransprüchen und aus dem nachfolgend anhand der Zeichnung prinzipmäßig beschriebenen Ausführungsbeispiel.

Es zeigt:
Fig. 1 ausschnittsweise ein Lenkgetriebe eines Kraftfahrzeuges mit der erfindungsgemäßen Lagerung und Sicherung des Ritzels
Fig. 2 eine dreidimensionale Darstellung der erfindungsgemäßen Sicherungsvorrichtung
Fig. 3 einen Schnitt durch die erfindungsgemäße Vorrichtung
Fig. 4 eine Stirnansicht der erfindungsgemäßen Vorrichtung
Fig. 5 ausschnittsweise eine Vergrößerung der Stirnansicht nach der Fig. 4
Fig. 6 ausschnittsweise eine Vergrößerung der Verzahnungsgeometrie im Gehäuse des Lenkgetriebes für Rasthebel der Sicherungsvorrichtung

Nachfolgend wird die Erfindung beispielsweise für einen Einsatz der Sicherungsvorrichtung in einem Lenkgetriebe eines Kraftfahrzeuges beschrieben, wobei ein Ritzel über ein Festlager in einem Getriebegehäuse gelagert ist.

Selbstverständlich lässt sich die erfindungsgemäße Sicherungsvorrichtung jedoch auf den verschiedensten Gebieten einsetzen, wobei eine kostengünstige, sichere und montagefreundliche Sicherungsvorrichtung für ein Lager, eine Führungsbuchse, eine Lagerbuchse, ein Zahnrad oder ein sonstiges Getriebeteil, eine Stellschraube für ein Druckstück für eine Zahnstange in einem Lenkgetriebe und ähnliche Anwendungsfälle, gewünscht wird. Ebenso ist eine Verwendung der erfindungsgemäße Sicherungsvorrichtung in einem Fahrwerk eines Kraftfahrzeuges möglich.

Da Lenkgetriebe für Kraftfahrzeuge mit einem Ritzel und einer Zahnstange allgemein bekannt sind, wozu beispielsweise auf die DE 10 2004 017 259 A1 verwiesen wird, wird nachfolgend nur auf die für die Erfindung wesentlichen Teile näher eingegangen.

Ein Ritzel 1 ist in einem Getriebegehäuse 2 über ein Festlager 3 gelagert. Das Ritzel ist in bekannter Weise mit einem Lenkhandrad (nicht dargestellt) und einer ebenfalls nicht dargestellten Zahnstange zur Umsetzung der Drehbewegung in eine Linearbewegung verbunden. Zur Sicherung des Ritzels 1 mit dem Innenring des Festlagers 3 dient eine auf die Ritzelnabe aufgeschraubte Mutter 4.

Zur Sicherung und Fixierung des Außenringes des Festlagers 3 ist erfindungsgemäß eine Sicherungsschraube 5 vorgesehen, die aus einem Kunststoffkörper als Hohlschraube besteht.

Anstelle von Kunststoff sind im Rahmen der Erfindung auch noch andere Materialien möglich, wie z. B. andere Nichtmetalle, ein Sinterteil oder ein Hybridelement.

Ein Dichtring 6 in einer Ringnut der Sicherungsschraube 5 übernimmt eine Dichtfunktion.

Wenn die Sicherungsschraube 5 aus einem Kunststoffkörper als Spritzgussteil hergestellt ist, kann der Dichtring 6 bei einem Mehrkomponentenspritzgussteil als Weichkomponente, z. B. aus Silikon, im Spritzprozess fest mit dem Kunststoffkörper der Sicherungsschraube verbunden werden. Eine derartige Ausgestaltung hat den Vorteil, dass die Herstellung und auch die Montage einfacher wird.

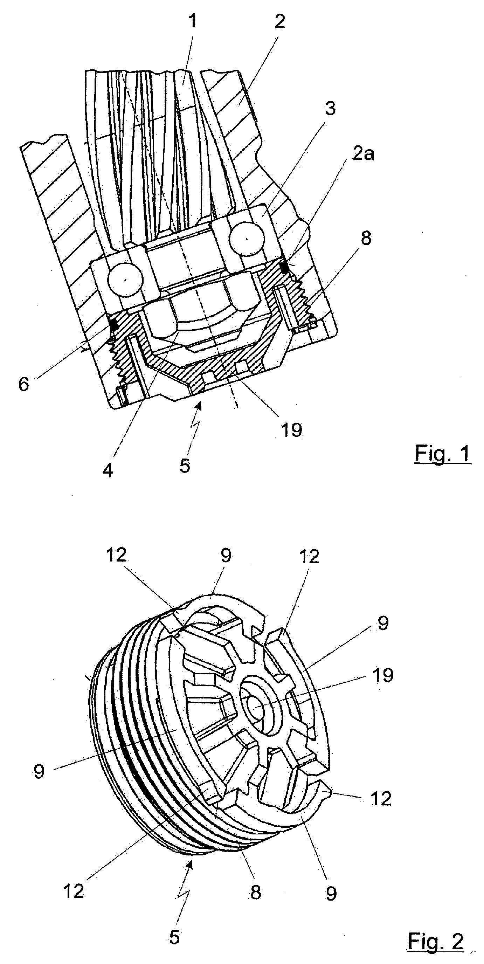

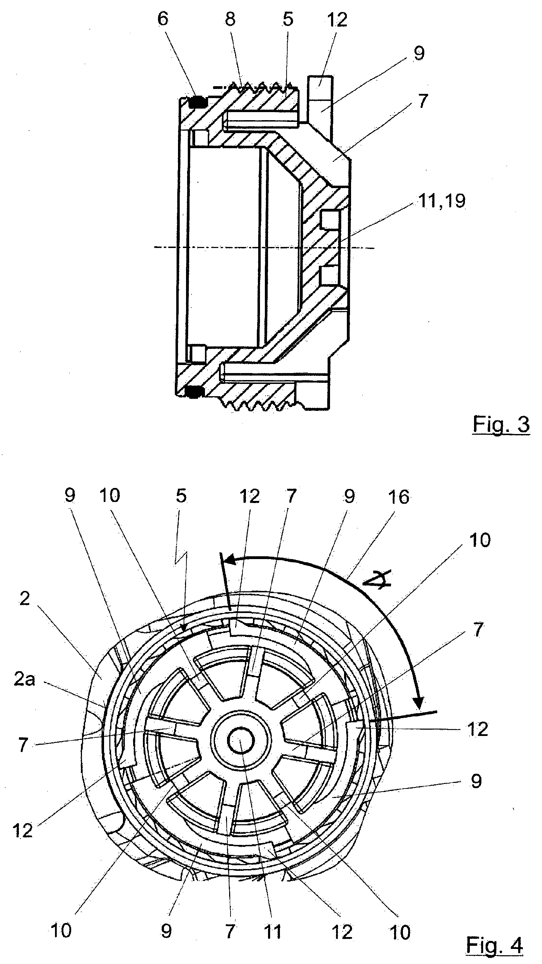

Das Außengewinde 8 der Sicherungsschraube 5 arbeitet mit einem Innengewinde in dem Getriebegehäuse 2 zusammen. Die Sicherungsschraube 5 wird bei der Montage mit einem bestimmten Drehmoment auf Anschlag angezogen. Zum Eindrehen der Sicherungsschraube 5 ist diese mit mehreren rippenförmig radial verlaufenden Mitnahmen 7 versehen (siehe insbesondere Figuren 2 und 4).

Selbstverständlich ist es jedoch auch möglich eine sogenannte "fliegende" Verschraubung hierfür vorzusehen, gekennzeichnet durch ein Einschrauben der Sicherungsschraube 5 in Abhängigkeit von einer Drehwinkelstellung oder einer Einschraubtiefe bzw. eines Einschraubweges.

Axialkräfte, welche über das Ritzel 1 und das Festlager 3 entstehen, müssen spielfrei aufgenommen werden. Über das selbsthemmende Außengewinde 8 der Sicherungsschraube werden die Kräfte dann in das Getriebegehäuse 2 eingeleitet.

Die Schraubensicherung besteht aus einem radialen nachstellenden Rastmechanismus. Hierzu ist die Sicherungsschraube 5 an ihrem Umfang mit mehreren Rasthebeln 9 versehen, die über radiale Speichen 10 jeweils im Bereich eines Endes des Rasthebels 9 mit einem Mittelstück 11 der Sicherungsschraube verbunden sind. Die radialen Speichen 10 können selbstverständlich auch Teil der rippenförmigen Mitnahmen 7 sein. Bei dem Ausführungsbeispiel sind vier Rasthebel 9 über den Umfang verteilt angeordnet. Selbstverständlich sind jedoch auch andere Anzahlen im Rahmen der Erfindung möglich.

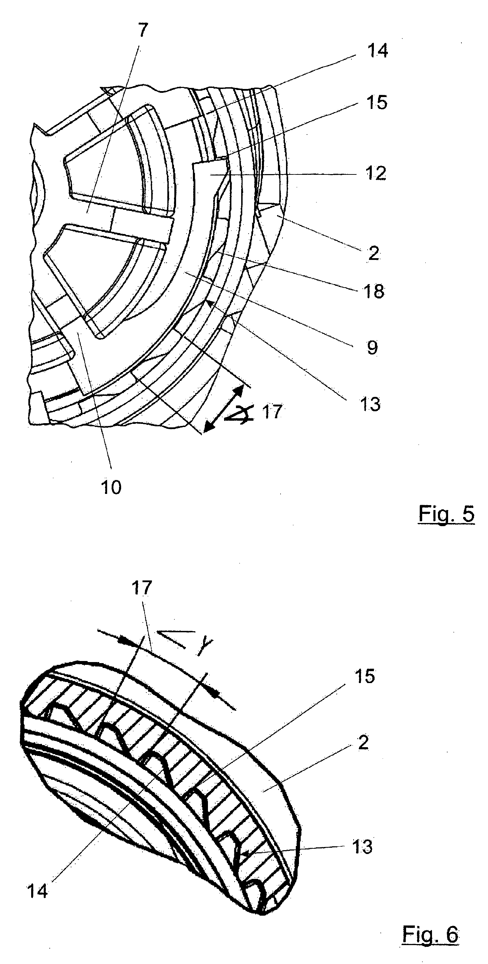

Die Rasthebel 9 sind mit Rastnasen 12 an ihren von den Speichen 10 abgewandten freien Enden versehen. Die Rastnasen 12 der Rasthebel 9 rasten in einer Verzahnungsgeometrie 13 im Getriebegehäuse 2 ein (siehe insbesondere die vergrößerte Darstellung der Verzahnungsgeometrie in der Fig. 6). Durch das Einraten der Rastnasen 12 in die Verzahnungsgeometrie 13 des Getriebegehäuses 2 wird ein selbständiges Aufdrehen der Sicherungsschraube 5 verhindert.

Beim Eindrehen der Sicherungsschraube 5 in das Getriebegehäuse 2 werden die Rasthebel 9 über Schrägen 18 im Getriebegehäuse 2 radial ausgelenkt und schnappen bei Erreichen des vorbestimmten Drehmomentes in Verzahnungslücken 14 der Verzahnungsgeometrie 13 ein. Ein Rückdrehen der Sicherungsschraube 5 wird über die sägeförmige Kontur der Verzahnungsgeometrie 13 verhindert. Die Rastnasen 9 stützen sich hierzu an Anlageflächen 15 in den Verzahnungslücken 14 der Verzahnungsgeometrie 13 ab.

Anstelle einer Auslenkung der Rastnasen 9 in radialer Richtung können diese auch im Bedarfsfall axial ausgelenkt werden und entsprechend in Verzahnungslücken der Verzahnungsgeometrie in der Bohrung des Gehäuses einrasten.

Auch hier ist das umgekehrte Prinzip bzw. die umgekehrte Lösung möglich, wonach in der Bohrung 2a angeordnete Rastnasen entsprechend axial in eine Verzahnungsgeometrie der Sicherungsschraube 5 einrasten.

Um ein drehwinkelunabhängiges Anziehen der Kunststoffschraube 5 in der Montage zu realisieren, wird die Rasthebelwinkelteilung 16 asymmetrisch ausgeführt (siehe Fig. 4). Entsprechend wird die Verzahnungsgeometrie 13 im Getriebegehäuse 2 mit einer möglichst kleinen Winkelteilung 17 ausgeführt. Auf diese Weise ist ein sicheres Einrasten von zumindest zwei Rastnasen 12 unabhängig vom Drehwinkel stets gewährleistet. Eine Asymmetrie führt zu einer höheren Auflösung bzw. einer größeren Wahrscheinlichkeit einer Verrastung im Sinne eines Noniuseffektes.

Mit asymmetrischer Rasthebelwinkelteilung 16 ist gemeint, dass die Rasthebel nicht gleichmäßig über den Umfang verteilt angeordnet sind. So können z. B. bei vier Rasthebeln statt exakt viermal 90°unterschiedliche Winkelteilungen und unterschiedliche Längen vorgesehen sein. Wird dann eine kleine Winkelteilung 17 zwischen den einzelnen Verzahnungslücken 14 (siehe Fig. 6) mit z. B. 15° gewählt, so wird durch die asymmetrische Rasthebelwinkelteilung 16 erreicht, dass auf jeden Fall ein sicheres Einrasten ca. alle 4° möglich wird (bezogen auf den aktuellen Anwendungsfall).

Die Sicherungsschraube 5 in Ausbildung aus einem Kunststoffkörper kann beispielsweise aus einem faserverstärkten Thermoplast als Spritzgussteil ausgebildet sein, der sich durch ein temperaturbeständiges Verhalten auszeichnet. Das Ausdehnungsverhalten des Kunststoffkörpers wird bei einem Temperaturwechsel durch den Werkstoff und die Faserausrichtung bestimmt. Hierzu werden die Fasern so ausgelegt, dass sie in Richtung der zu erwartenden größeren Ausdehnung verlaufen.

Durch die möglichen großen Biegelängen können die Rasthebel 9 aus hochfesten Kunststoffen mit einer geringen Bruchdehnung verwendet werden.

Die sternförmige Anordnung der Mitnehmer 7 und der Speichen 9 mit einem zentralen Anspritzpunkt an der Stirnseite 19 erlaubt ein optimales Fließverhalten des Kunststoffes im Spritzprozess zur Vermeidung von Lunker und Porositäten. Zusätzlich der Aufnahme des Drehmomentes von einem Montagewerkzeug beim Einschrauben der Sicherungsschraube 5 bringt diese Ausgestaltung damit einen weiteren Vorteil.

Das Gewinde des Kunststoffkörpers der Sicherungsschraube 5 kann als metrisches Spitzengewinde ausgeführt sein, wobei der Flankendurchmesser des Gewindes so ausgelegt wird, dass nur ein geringes Gewindespiel vorhanden ist.

Selbstverständlich sind im Rahmen der Erfindung auch andere Gewindeformen wie z. B. ein konisches Gewinde möglich.

Die Innenverzahnung im Getriebegehäuse 2 und ebenso auch die Verzahnungsgeometrie 13 können fertig gegossen sein. Über eine Kontrollbearbeitung der Verzahnungsgeometrie 13 im Gehäuse 2 kann bei Bedarf auch eine kleine Toleranz realisiert werden.

### Bezugszeichenliste

- 1: Ritzel
- 2: Getriebegehäuse
- 2a: Bohrung
- 3: Festlager
- 4: Mutter
- 5: Sicherungselement, Sicherungsschraube
- 6: Dichtring
- 7: Mitnahmen
- 8: Außengewinde
- 9: Rasthebel
- 10: Speiche
- 11: Mittelstück
- 12: Rastnase
- 13: Verzahnungsgeometrie
- 14: Verzahnungslücken
- 15: Anlagefläche
- 16: Rasthebelwinkelteilung
- 17: Winkelteilung
- 18: Schrägen
- 19: Anspritzpunkt

## Patentansprüche

1. Vorrichtung zur Sicherung einer Einheit in einem Gehäuse (2), insbesondere eines Festlagers (3) eines Ritzels (1) in einem Lenkgetriebe eines Kraftfahrzeuges, mit einem Sicherungselement, das in eine Bohrung (2a) in dem Gehäuse (2) eingesetzt ist, wobei das Sicherungselement (5) als Kunststoffkörper ausgebildet ist, wobei das Sicherungselement (5) mit wenigstens einem Rasthebel (9) versehen ist, wobei der wenigstens eine Rasthebel (9) über eine an dem freien Ende des Rasthebels angeordnete Rastnase (12) in Verzahnungslücken (14) einer Verzahnungsgeometrie (13) in der Bohrung (2a) des Gehäuses (2) einrastet oder wobei wenigstens ein Rasthebel mit einer Rastnase in der Bohrung (2a) angeordnet ist, wobei die Rastnase in Verzahnungslücken einer Verzahnungsgeometrie in dem Sicherungselement (5) einrastet, **dadurch gekennzeichnet, dass** der Kunststoffkörper des Sicherungselements (5) als Mehrkomponentenspritzgussteil ausgeführt ist, wobei ein Dichtring (6) als Weichkomponente im Spritzprozess fest mit dem Kunststoffkörper verbunden wird.

2. Vorrichtung nach Anspruch 1, **dadurch gekennzeichnet, dass** das Sicherungselement (5) als Sicherungsschraube ausgebildet ist, die über ein Außengewinde (8) mit einem Innengewinde der Bohrung (2a) des Gehäuses (2) verbunden ist, wobei die Sicherungsschraube mit an ihrem Umfang verteilt angeordneten Rasthebel (9) versehen ist, und wobei die Rasthebel (9) jeweils mit an den freien Enden der Rasthebel angeordnete Rastnasen (12) in Verzahnungslücken (14) der Verzahnungsgeometrie (13) des Gehäuses (2) einrasten.

3. Vorrichtung nach Anspruch 2, **dadurch gekennzeichnet, dass** die Sicherungsschraube (5) als Hohlschraube ausgebildet ist.

4. Vorrichtung nach Anspruch 2 oder 3, **dadurch gekennzeichnet, dass** wenigstens vier Rasthebel (9) über den Umfang der Sicherungsschraube (5) verteilt angeordnet sind.

5. Vorrichtung nach Anspruch 4, **dadurch gekennzeichnet, dass** die Rasthebel (9) mit asymmetrischer Winkelteilung über den Umfang der Sicherungsschraube (5) verteilt angeordnet sind.

6. Vorrichtung nach Anspruch 5, **dadurch gekennzeichnet, dass** die Winkelteilung (17) in der Verzahnungsgeometrie (13) des Gehäuses (2) mit einer deutlich kleineren Winkelteilung im Vergleich zur Winkelteilung (16) der Rasthebel (9) ausgeführt ist.

7. Vorrichtung nach einem der Ansprüche 1 bis 6, **dadurch gekennzeichnet, dass** das Sicherungselement (5) mit mehreren radial verlaufenden rippenförmigen Mitnahmen (7) versehen ist.

8. Vorrichtung nach einem der Ansprüche 1 bis 7, **dadurch gekennzeichnet, dass** das Sicherungselement (5) als Kunststoffkörper, insbesondere aus einem faserverstärkten Thermoplast als Spritzgussteil oder als Mehrkomponententeil ausgebildet ist.

9. Vorrichtung nach Anspruch 8, **dadurch gekennzeichnet, dass** die Faserausrichtung in dem Thermoplast in Richtung der zu erwartenden größeren Ausdehnung verläuft.

10. Vorrichtung nach Anspruch 8 oder 9, **dadurch gekennzeichnet, dass** der Kunststoffkörper mit einem zentralen Anspritzpunkt (19) versehen ist.

11. Vorrichtung nach einem der Ansprüche 1 bis 10, **dadurch gekennzeichnet, dass** sich die Rastnasen (12) der Rasthebel (9) jeweils an einer Anlagefläche (15) am Gehäuse (2) abstützen.

12. Vorrichtung nach einem der Ansprüche 2 bis 11, **dadurch gekennzeichnet, dass** das Außengewinde (8) der Sicherungsschraube (5) als metrisches Spitzengewinde ausgebildet ist.

13. Vorrichtung nach einem der Ansprüche 2 bis 11, **dadurch gekennzeichnet, dass** das Außengewinde (8) der Sicherungsschraube (5) als konisches Gewinde ausgebildet ist.

## Claims

1. Device for securing a unit in a housing (2), in particular a locating bearing (3) of a pinion (1) in a steering gear of a motor vehicle, said device having a securing element which is inserted into a bore (2a) in the housing (2), wherein the securing element (5) is realized as a plastics material body, wherein the securing element (5) is provided with at least one ratchet lever (9), wherein the at least one ratchet lever (9) latches into toothing gaps (14) of a toothing geometry (13) in the bore (2a) of the housing (2) by means of a latching lug (12) which is arranged on the free end of the ratchet lever or wherein at least one ratchet lever is arranged with a latching lug in the bore (2a), wherein the latching lug latches into toothing gaps of a toothing geometry in the securing element (5), **characterized in that** the plastics material body of the securing element (5) is realized as a multi-component injection molded part, wherein a sealing ring (6) is connected fixedly to the plastics material body in the injection molding process as a soft component.

2. Device according to Claim 1, **characterized in that** the securing element (5) is realized as a securing screw which is connected to an internal thread of the bore (2a) of the housing (2) by means of an external thread (8), wherein the securing screw is provided with ratchet levers (9) which are arranged distributed on the circumference thereof, and wherein the ratchet levers (9) latch into toothing gaps (14) of the toothing geometry (13) of the housing (2) in each case by way of latching lugs (12) which are arranged on the free ends of the ratchet levers.

3. Device according to Claim 2, **characterized in that** the securing screw (5) is realized as a hollow screw.

4. Device according to Claim 2 or 3, **characterized in that** at least four ratchet levers (9) are arranged distributed over the circumference of the securing screw (5).

5. Device according to Claim 4, **characterized in that** the ratchet levers (9) are arranged distributed over the circumference of the securing screw (5) at asymmetrical angular pitch.

6. Device according to Claim 5, **characterized in that** the angular pitch (17) in the toothing geometry (13) of the housing (2) is realized at a clearly smaller angular pitch compared to the angular pitch (16) of the ratchet levers (9).

7. Device according to one of Claims 1 to 6, **characterized in that** the securing element (5) is provided with several radially extending, rib-shaped carriers(7).

8. Device according to one of Claims 1 to 7, **characterized in that** the securing element (5) is realized as a plastics material body, in particular produced of a fiber reinforced thermoplast as an injection molded part or as a multi-component part.

9. Device according to Claim 8, **characterized in that** the fiber alignment in the thermoplast extends in the direction of the anticipated greater expansion.

10. Device according to Claim 8 or 9, **characterized in that** the plastics material body is provided with a central injection point (19).

11. Device according to one of Claims 1 to 10, **characterized in that** the latching lugs (12) of the ratchet levers (9) are supported in each case on a contact face (15) on the housing (2).

12. Device according to one of Claims 2 to 11, **characterized in that** the external thread (8) of the securing screw (5) is realized as a metric angular thread.

13. Device according to one of Claims 2 to 11, **characterized in that** the external thread (8) of the securing screw (5) is realized as a conical thread.

## Revendications

1. Dispositif pour la fixation d'une unité dans un boîtier (2), en particulier d'un palier fixe (3) d'un pignon (1) dans un boîtier de direction d'un véhicule automobile, comprenant un élément de fixation qui est inséré dans un alésage (2a) dans le boîtier (2), l'élément de fixation (5) étant réalisé sous forme de corps en plastique, l'élément de fixation (5) étant pourvu d'au moins un levier d'encliquetage (9), l'au moins un levier d'encliquetage (9) s'encliquetant dans des espaces de denture (14) d'une géométrie de denture (13) dans l'alésage (2a) du boîtier (2) par le biais d'un ergot d'encliquetage (12) disposé au niveau de l'extrémité libre du levier d'encliquetage ou au moins un levier d'encliquetage étant disposé avec un ergot d'encliquetage dans l'alésage (2a), l'ergot d'encliquetage s'encliquetant dans des espaces de denture d'une géométrie de denture dans l'élément de fixation (5), **caractérisé en ce que** le corps en plastique de l'élément de fixation (5) est réalisé sous forme de pièce moulée par injection à plusieurs composants, une bague d'étanchéité (6) en tant que composant souple étant connectée fixement au corps en plastique au cours du processus de moulage par injection.

2. Dispositif selon la revendication 1, **caractérisé en ce que** l'élément de fixation (5) est réalisé sous forme de vis de fixation qui est connectée par le biais d'un filetage extérieur (8) à un filetage intérieur de l'alésage (2a) du boîtier (2), la vis de fixation étant pourvue de leviers d'encliquetage (9) répartis sur sa périphérie, et les leviers d'encliquetage (9) s'encliquetant à chaque fois dans des espaces de denture (14) de la géométrie de denture (13) du boîtier (2) avec des ergots d'encliquetage (12) disposés à l'extrémité libre des leviers d'encliquetage.

3. Dispositif selon la revendication 2, **caractérisé en ce que** la vis de fixation (5) est réalisée sous forme de vis creuse.

4. Dispositif selon la revendication 2 ou 3, **caractérisé en ce qu'**au moins quatre leviers d'encliquetage (9) sont répartis sur la périphérie de la vis de fixation (5).

5. Dispositif selon la revendication 4, **caractérisé en ce que** les leviers d'encliquetage (9) sont répartis sur la périphérie de la vis de fixation (5) avec une répartition angulaire asymétrique.

6. Dispositif selon la revendication 5, **caractérisé en ce que** la répartition angulaire (17) dans la géométrie de denture (13) du boîtier (2) est réalisée avec une répartition angulaire nettement inférieure par comparaison avec la répartition angulaire (16) des leviers d'encliquetage (9).

7. Dispositif selon l'une quelconque des revendications 1 à 6, **caractérisé en ce que** l'élément de fixation (5) est pourvu de plusieurs éléments d'entraînement (7) en forme de nervures s'étendant radialement.

8. Dispositif selon l'une quelconque des revendications 1 à 7, **caractérisé en ce que** l'élément de fixation (5) est réalisé sous forme de corps en plastique, en particulier à partir d'un thermoplastique renforcé par des fibres en tant que pièce moulée par injection ou sous forme de pièce à plusieurs composants.

9. Dispositif selon la revendication 8, **caractérisé en ce que** l'orientation des fibres dans le thermoplastique s'étend dans la direction de la plus grande extension attendue.

10. Dispositif selon la revendication 8 ou 9, **caractérisé en ce que** le corps en plastique est pourvu d'un point de moulage par injection central (19).

11. Dispositif selon l'une quelconque des revendications 1 à 10, **caractérisé en ce que** les ergots d'encliquetage (12) des leviers d'encliquetage (9) s'appuient à chaque fois au niveau d'une surface d'appui (15) contre le boîtier (2).

12. Dispositif selon l'une quelconque des revendications 2 à 11, **caractérisé en ce que** le filetage extérieur (8) de la vis de fixation (5) est réalisé sous forme de filetage en pointe métrique.

13. Dispositif selon l'une quelconque des revendications 2 à 11, **caractérisé en ce que** le filetage extérieur (8) de la vis de fixation (5) est réalisé sous forme de filetage conique.
